Europäisches Patentamt

European Patent Office

Office européen des brevets

(19)

(11) Numéro de publication: **0 085 000**
**B1**

(12) **FASCICULE DE BREVET EUROPEEN**

(45) Date de publication du fascicule du brevet: **01.07.87**

(51) Int. Cl.⁴: **C 05 F 9/02**

(21) Numéro de dépôt: **83400115.8**

(22) Date de dépôt: **18.01.83**

(54) **Installation de compostage d'éléments d'origines diverses par fermentation aérobie.**

(30) Priorité: **20.01.82 FR 8200949**

(43) Date de publication de la demande:
**03.08.83 Bulletin 83/31**

(45) Mention de la délivrance du brevet:
**01.07.87 Bulletin 87/27**

(84) Etats contractants désignés:
**AT BE CH DE FR GB IT LI LU NL SE**

(56) Documents cités:
**EP-A- 40 147**
**FR-A-1 426 317**
**FR-A-1 585 900**
**FR-A-2 274 581**
**LU-A- 80 503**

(73) Titulaire: **Association Point d'Acces
Technologique 81
Hôtel Consulaire 3, Rue Marcel Briguiboul
F-81100 Castres (FR)**

(72) Inventeur: **Plat, Jean Yves
15 Rue Bonnafé
F-81100 Castres (FR)**

(74) Mandataire: **Ravina, Bernard
Cabinet Bernard RAVINA 24, boulevard Riquet
F-31000 Toulouse (FR)**

Courier Press, Leamington Spa, England.

**Description**

La présente invention a pour objet une installation de compostage pour la fabrication de compost stabilisé par fermentation aérobie de composés animaux et/ou végétaux d'origines diverses.

Les composés organiques animaux et/ou végétaux mis en oeuvre par l'installation selon l'invention sont des déchets de toute nature et origine préalablement triés pour en retirer les matériaux non susceptibles de compostage tels que les métaux ou les matières plastiques.

Ces déchets peuvent être ou comporter des déchets d'abattoirs, du sang, des matières de dégrillage, des matières de flottaison, des matières stercoraires, des ordures ménagères, des sciures, des rafles de maïs ou des végétaux et plus généralement tous déchets susceptibles de fermentation.

La fermentation aérobie d'un composé tel que défini vise à une transformation de celui-ci en un produit stable, homogène et pasteurisé obtenu par activité microbiologique entraînant une consommation d'oxygène par les micro-organismes, une production de gaz carbonique et une production calorifique.

La consommation d'oxygène et la production de gaz carbonique est dénommée activité respiratoire.

Ces trois paramètres sont intimement liés.

Des conditions défavorables peuvent gêner le développement de l'activité respiratoire des micro-organismes aérobie, ce qui peut se traduire par une baisse de la température du mélange, limitant l'effet de pasteurisation ou encore par un développement des micro-organismes anaérobie susceptibles d'engendrer une production de gaz malodorants.

Il est donc nécéssaire pour maitriser le compostage, de réguler, en relation les uns avec les autres, les trois paramètres ci-dessus énoncés.

On a proposé de réguler l'activité respiratoire en insufflant de l'air en fonction de la teneur en $CO_2$ des gaz rejettés ou en fonction de la température, les résultats obtenus sont imparfaits car la mesure est effectuée sur une masse trop importante pour être représentative des conditions homogènes de fermentation.

On a proposé également pour favoriser l'activité respiratoire de procéder à un brassage continu de la masse du produit traité. Ce procédé est coûteux en énergie, il est en outre imparfait dans la mesure où un brassage continu peut être nuisible à l'installation des colonies microbiennes.

On a proposé également de procéder à un brassage intermittent conjointement à une insufflation d'air lorsque était observé un ralentissement du processus de fermentation.

Ce procédé est imparfait car il entraîne des irrégularités dans le déroulement du processus de fermentation générateur de perte de temps.

La présente invention vise à une régulation corrélative des paramètres énoncés plus haut.

Par ailleurs, la durée des opérations de compostage par fermentation aérobie est généralement longue pour parvenir à un produit utilisable sans risques, notamment dans l'agriculture.

Cela conduit souvent à écarter la solution du compostage pour la valorisation des déchets.

En effet, compte tenu de la durée de l'opération et des quantités qu'il est nécéssaire de traiter pour que l'opération présente de l'intérêt au point de vue économique, on est conduit à défaut de prévoir des stations de compostage à grande capacité, couteuse en espace et en matériel, à procéder à un stockage des produits préalablement au traitement.

Ce stockage outre les contraintes de surface est générateur de nuisances, notamment olfactives.

La présente invention vise à obvier à l'inconvénient, ci-dessus en introduisant la possibilité d'un traitement en continu des déchets à mesure de leur production et en permettant de traiter éventuellement en des lieux différents les phases de stabilisation et de fermentation.

L'installation de compostage selon l'invention en vue de l'obtention d'un compost stabilisé par fermentation aérobie de composés animaux et/ou végétaux d'origines diverses comprend: une enceinte ou fermenteur doté de moyens internes de brassage des composés soumis à la fermentation, les dits moyens pouvant être actionnés de manière intermittente et se caractérise en ce que le fermenteur est constitué à partir d'éléments modulaires identiques interchangeables et superposables. Chaque module étant constitué par une cuve cylindrique horizontale dotée de moyens de brassage, de moyens d'introduction d'air, d'une ouverture supérieure de chargement et d'une ouverture inférieure de vidange en relation avec l'ouverture de chargement du module inférieur. Les ouvertures d'alimentation et de vidange étant respectivement déposées à chaque extrémité de la cuve suivant son axe longitudinal ce qui permet une cumulation de la matière au fur et à mesure de son traitement.

Suivant une autre disposition de l'invention l'installation de compostage se caractérise en ce que chacun des éléments modulaires ou cuve horizontale est doté sur un axe transversal horizontal de pales disposées suivant une configuration hélicoïdale en sorte qu'elles constituent des moyens de brassage ₌ et d'évacuation du produit.

Suivant encore une autre disposition de l'invention l'installation de compostage se caractérise en ce que les cuves sont disposées à l'intérieur d'un bâti permettant leur gerbage.

Suivant encore une autre disposition de l'invention l'installation de compostage se caractérise en ce que entre les ouvertures de vidange et d'alimentation de l'un quelconque des éléments modulaires est intercalé un dispositif broyeur et ou déchiqueteur.

D'autres avantages et caractéristiques apparaîtront à la lecture de la description ci-après de l'invention suivant une forme préférée de réalisation donnée a titre d'exemple non limitatif et illustrée par les dessins joints dans lesquels:

— la figure 1 est une vue en plan d'une installation de compostage selon l'invention,

— la figure 2 est une vue en élévation d'un fermenteur modulaire selon l'invention,

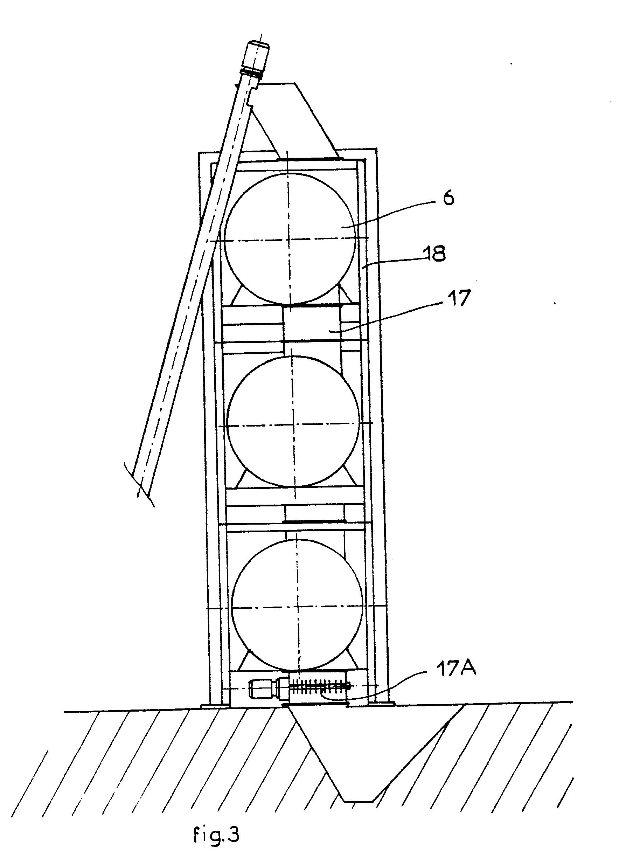

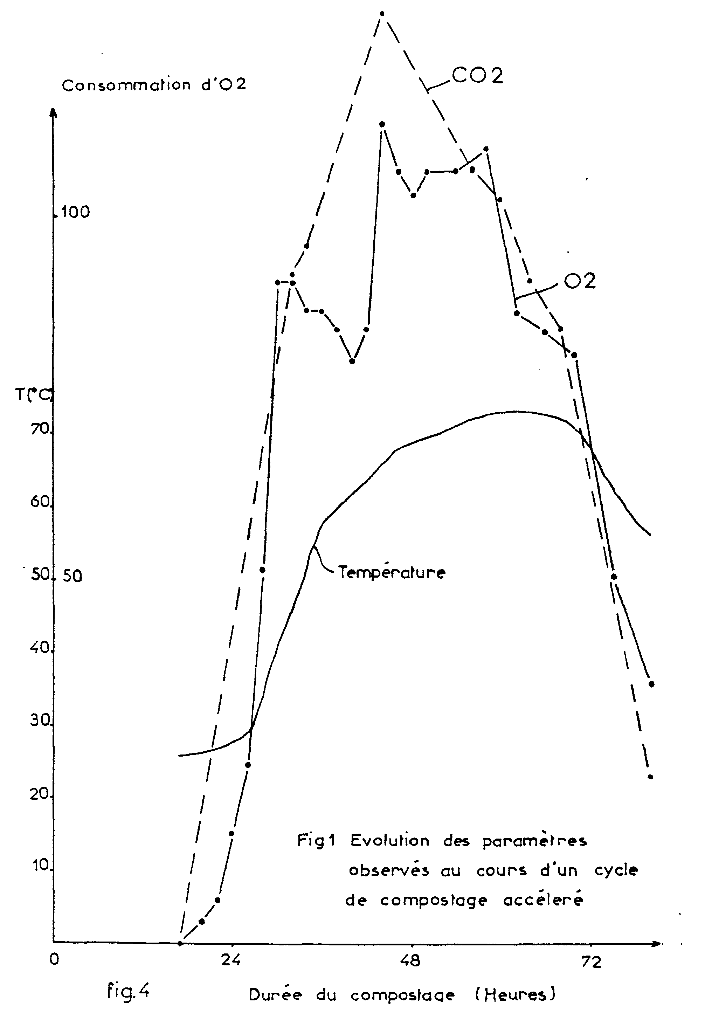

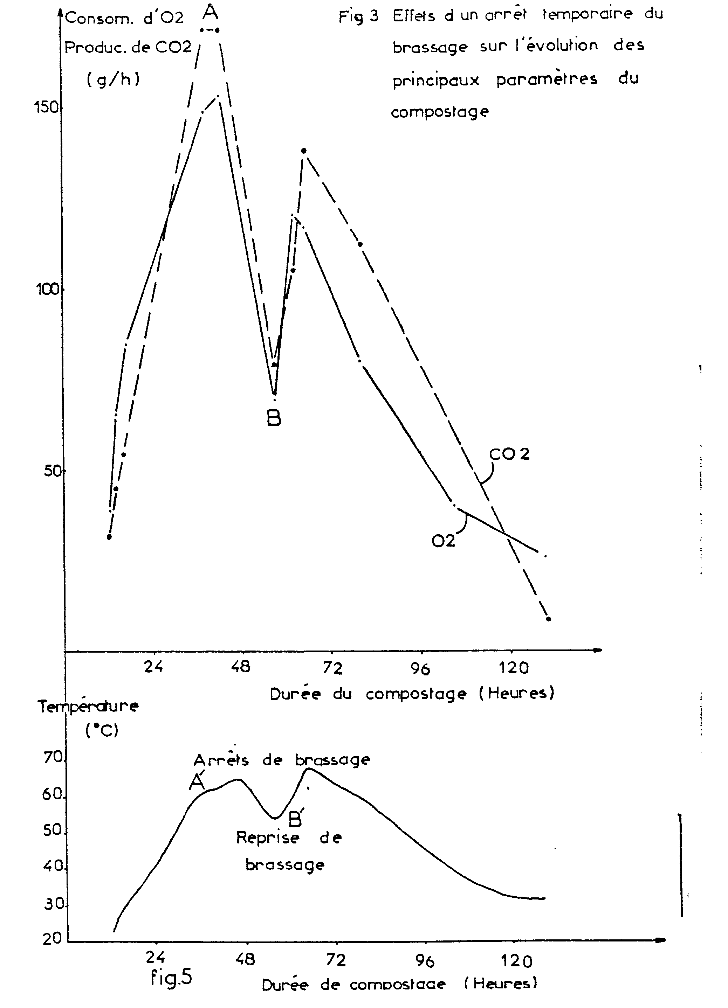

— la figure 3 est une vue latérale de la fig. 2,

— la figure 4 est un graphique représentant l'action du brassage sur l'évolution des paramètres observés en cours d'un cycle de compostage selon l'invention,

— la figure 5 est un graphique représentant l'action du brassage sur l'évolution des principaux paramètres du compostage,

— la figure 6 est un graphique représentant les variations de la quantité d'$O_2$ résiduel en fonction de la fréquence du brassage des produits.

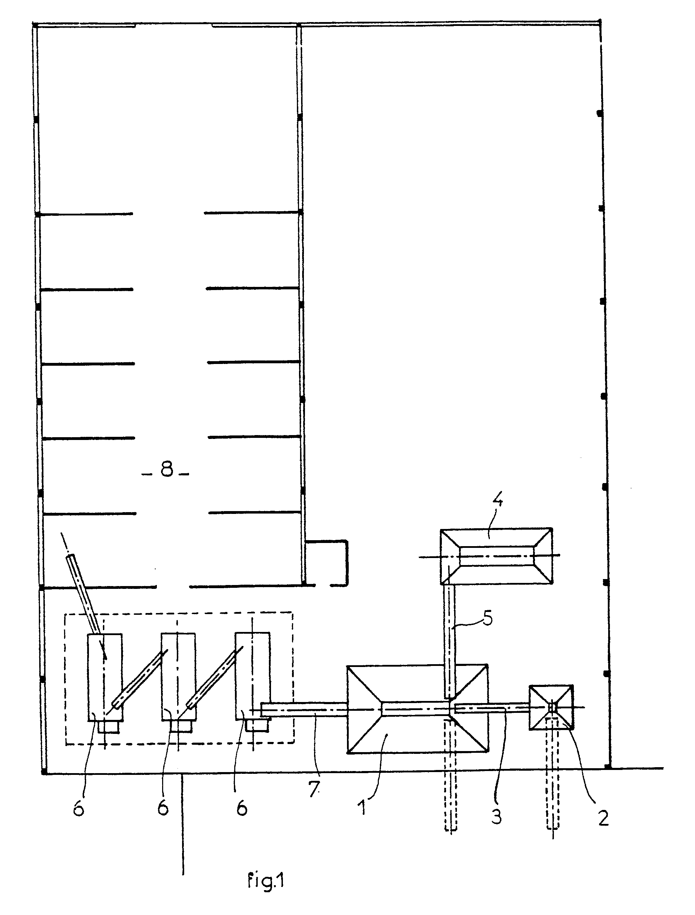

Telle que représentée en fig. 1, l'installation de compostage selon l'invention comprend une trémie réceptrice 1 avec dispositif mélangeur non représenté du type connu des produits qui y sont déversés.

En amont de la trémie 1 sont disposées en communication avec celle-ci par des moyens connus du type tapis transporteur ou autres, des trémies spécifiques propres à la réception de certains types de produits et dotées si besoin de matériels de traitement des dits produits.

En figure 1 est représentée une trémie 2 pour matières stercoraires et de dégrillage reliée à la trémie centralisatrice 1 par une vis transporteuse 3 rotative dans une auge perforée pour obtenir un égouttage du produit.

Une trémie 4 est également représentée pouvant recevoir d'autres produits tels que des apports carbonés du type rafles de maïs concassés, la dite trémie étant en relation avec la trémie 1 par un transporteur 5.

Il va de soi que d'autres trémies spécifiques peuvent être prévues et que d'autre part, certains types de matières organiques peuvent être apportés directement à la trémie centralisatrice.

En aval de la trémie centralisatrice 1 est disposée une batterie de un ou plusieurs fermenteurs 6 ou réacteurs alimentés à partir de la trémie 1 par un tapis 7 ou tout autre dispositif.

En bout de la batterie de fermenteurs 6 dans laquelle s'effectue l'opération de compostage est ménagée une aire 8 de stockage et de maturation du produit stabilisé obtenu.

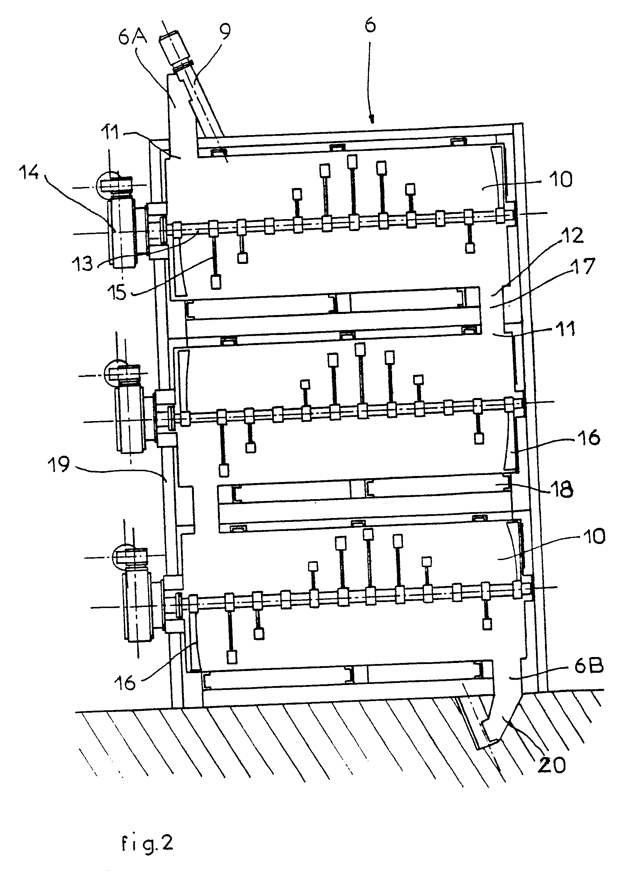

En fig. 2 est représenté un fermenteur 6.

Chaque fermenteur 6 est doté de moyens d'alimentation en mélange à traiter constitués par exemple comme représenté par une vis sans fin 9.

A la base de chaque fermenteur, s'il en est disposé plusieurs destinés à traiter successivement une même charge de mélange, sont disposés des moyens de déversement du type goulotte 20 et de reprise de mélange du type vis sans fin pour alimenter le fermenteur voisin.

Les vis sans fin 9 sont dotées de moyens d'asservissement du type motoréducteur électrique commandés pour fonctionner de manière continue ou discontinue.

Chacun de ces fermenteurs 6 est doté de moyens d'alimentation en air, de moyens de mesure des paramètres de la fermentation aérobie tels que moyen de mesure de type connu de la température, moyen de mesure de l'activité respiratoire, c'est-à-dire de la production de $CO_2$ et de l'oxygène résiduel.

Chacun des fermenteurs 6 est doté de dispositifs de fermetures étanches non représentés à l'entrée 6A et à la sortie 6B. Chacun des fermenteurs 6 est constitué par un ou plusieur éléments modulaires identiques 10.

Comme représenté en fig. 2, le fermenteur 6 est constitué par trois éléments modulaires superposés.

Chacun des éléments modulaires 10 est constitué par une cuve cylindrique horizontale dotée d'une ouverture supérieure 11 de chargement et d'une ouverture inférieure 12 de vidange.

Les ouvertures 11 et 12 sont ménagées respectivement à chacune des extrémités de l'axe longitudinal du module cylindrique.

La circulation du mélange s'effectue à l'intérieur du fermenteur 6 d'un module 10 à l'autre par leurs ouvertures 11 et 12 sous l'action des moyens de brassage du mélange, ce qui crée une circulation du mélange de l'entrée 6A vers la sortie 6B.

Chacun des modules est doté de moyens de brassage du mélange.

Comme représenté en fig. 2, les moyens de brassage sont constitués par un arbre horizontal 13 coïncidant avec l'axe de la cuve et tourillonnant dans des paliers des flanss de la cuve.

Un groupe moteur 14 extérieur et monté sur l'un des flancs de la cuve est calé sur le dit arbre 13.

De préférence, le groupe moteur est un motoréducteur électrique relié à un dispositif de commande de type connu.

Sur l'arbre 13 sont montées fixées des pales 15 avec masselotte d'extrémité.

De préférence, les pales 15 sont disposées suivant une configuration hélicoïdale en sorte de constituer une vis qui contribuera simultanément au brassage du mélange renfermé dans la cuve sous l'ouverture d'alimentation jusqu'à l'autre extrémité de la cuve où se trouve l'ouverture de vidange.

Les orifices 11 et 12 des cuves sont en relation par un conduit 17.

A chacune des extrémités de l'arbre 13 est montée latéralement au flanc interne de la cuve une pale racleuse 16.

De préférence, chacune des pales 16 est diamétralement opposée à l'autre.

Chacune des cuves cylindriques constituant l'élément modulaire est fixé sur un bâti 18 en forme de parallélépipède rectangle qui permet le gerbage des modules les uns sur les autres.

De ce fait, il est possible de réaliser en fonction des besoins un fermenteur constitué par un ou plusieurs modules.

Suivant une forme caractéristique de réalisation de l'invention telle que représentée en fig. 2, les orifices d'alimentation supérieurs et d'évacuation inférieurs de chacun des modules sont respectivement ménagés à chacune des extrémités du dit module en sorte que, lors de leur superposition, à l'orifice d'évacuation du module supérieur corresponde l'orifice d'alimentation du module inférieur.

La conception modulaire et le conduit 17 ménagé entre les ouvertures 12 et 11 de chaque module permettent de loger dans le dit conduit 17, en tout point du circuit, entre deux modules un dispositif déchiqueteur en fonction des besoins.

Comme représenté en fig. 2, l'ensemble fermenteur 6 est doté d'une isolation extérieure 19 afin d'éviter les déperditions de chaleur.

Chacune des cuves est dotée de buses non représentées d'alimentation en air à partir d'un groupe ventilateur ou compresseur doté de moyens connus de régulation de son débit.

Afin d'optimiser le procédé, il est également prévu des moyens d'apports calorifiques par exemple constitués par des gaines avec ou sans accélérateurs de circulation qui transfèrent la chaleur depuis par exemple le fermenteur médian ou le module inférieur, c'est-à-dire celui ou, ceux où la réaction est à son niveau optimum et où donc le dégagement calorifique est important, vers ceux où la réaction n'est pas encore commencée, ou est à ses débuts, c'est-à-dire le premier fermenteur ou les modules supérieurs.

La mise en oeuvre de l'installation selon l'invention est la suivante: Les différents composés du produit sont amenés dans la trémie centralisatrice 1, éventuellement après avoir subi une préparation telle que par exemple un broyage.

Dans cette trémie le produit subit un mélange destiné à l'homogénéiser.

Il est éventuellement chargé en eau afin de parvenir au degré hygrométrique désiré qui est de l'ordre de 60 % à 70 % du poids total du mélange.

Le mélange est effectué à partir des différents composants en sorte que le rapport carbone sur azote soit compris entre 20 et 40. Le pH est controlé et éventuellement réglé à 7, ou entre 7 et 9. Le produit est introduit dans le fermenteur 6 où la réaction débute et il passe successivement dans chacun des modules tandis que au fur et à mesure l'alimentation en produit non traité se poursuit dans la batterie de fermentation.

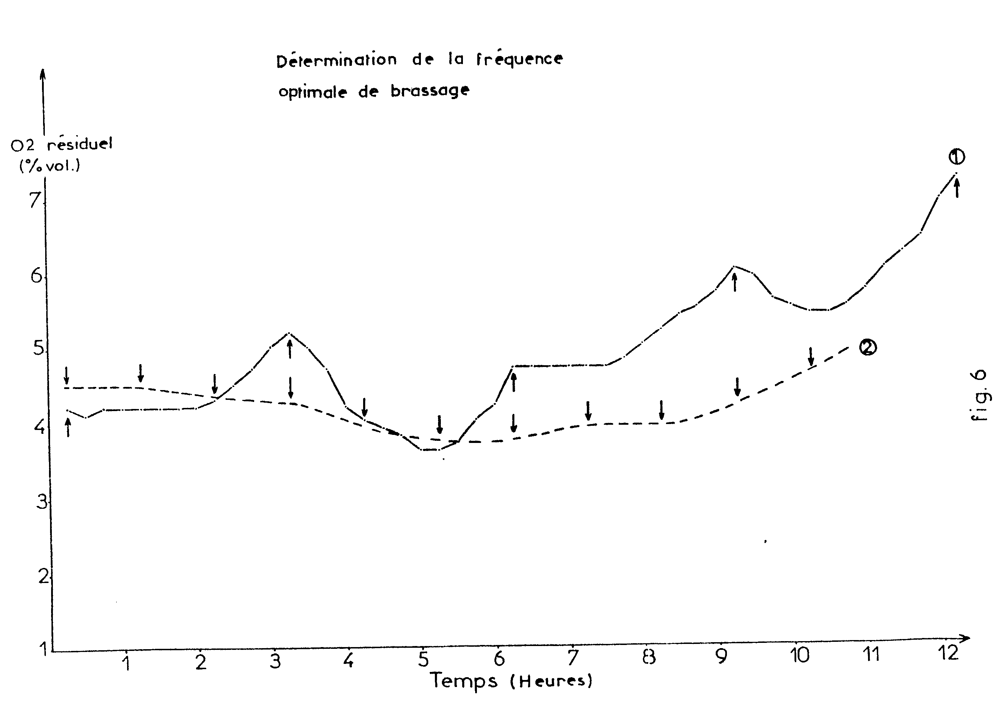

En fig. 4 est matérialisée l'évolution des différents paramètres d'une opération de compostage rapide selon l'invention.

La production de $CO_2$ est représentée en traits longs et la courbe de température par un trait plein.

La réaction met à se déclencher une période de plusieurs heures, mais qui peut être raccourcie par préchauffage à partir des apports calorifiques tels que décrits, et se traduit par une ascension rapide de la production de $CO_2$ jusqu'à un maximum au terme d'une période d'environ 48 h puis elle décroit progressivement.

Il en est de même pour la consommation d'oxygène.

La courbe de température subit une évolution qui situe son niveau maximum aux environs de 70°C.

Au terme d'une période d'environ 72 heures, on constate une retombée qui annonce la fin de la réaction.

Pendant toute la durée de la réaction, il est nécéssaire que soit assurée une bonne corrélation entre les différents paramètres.

Cette corrélation est obtenue par une alimentation en air permanente au niveau de chaque module 6 et en régulant cette alimentation en fonction des besoins en oxygène des micro-organismes, c'est-à-dire en fonction d'un déroulement optimisé de l'activité respiratoire.

L'alimentation en air s'effectue par tous moyens connus.

Sa régulation s'effectue en fonction de la teneur en oxygène ou en $CO_2$ du gaz de sortie.

De préférence, la mesure est effectuée par tous moyens connus sur la teneur en oxygène résiduel du gaz de sortie et la régulation vise à maintenir à tout moment un résidu d'oxygène de 2 à 5 % du volume.

La quantité d'air insufflée pour tenir compte des besoins, compte tenu du volume interne de chaque module qui est dans l'exemple choisi de 8 m³, est de l'ordre de 3 m³ d'air par heure et par mètre cube de produit traité.

La température est également régulée de sorte à être maintenue au cours du cycle dans un intervalle de 5°C en plus ou en moins de la température interne moyenne de chaque module.

La durée, la fréquence et l'intensité de l'opération de brassage sont réglées pour maintenir l'activité respiratoire à son activité maximum.

Le brassage a essentiellement pour but d'homogénéiser le produit en évitant la formation de sphères d'influence microbiennes spécifiques.

Comme représenté en fig. 5, le brassage intervient sur les trois paramètres de la réaction.

Le point A des courbes de production de $CO_2$ et de consommation d'oxygène représante une interruption temporaire du brassage énoncé plus avant comme devant débuter en cas de baisse de l'activité respiratoire et/ou de la température.

Il est alors constaté une diminution rapide de la consommation d'$O_2$ et de la production de $CO_2$ qui chute de plus de 60 % en quelques heures.

A l'inverse, une reprise du brassage entraîne un accroissement rapide de ces deux données.

Il en est de même, comme représenté en A' et B', de la courbe de température.

Un arrêt du brassage ou la suppression de celui-ci entraîne une chute de température, jusqu'à reprise de celui-ci.

La fig. 6 représente deux cas de variation de la quantité d'oxygène résiduel dans le gaz de sortie en relation avec l'organisation du brassage du produit et donc illustre la consommation d'oxygène et l'activité respiratoire.

En traits discontinus est représentée en pourcentage la proportion d'$O_2$ résiduel dans le cas d'un préréglage de la fréquence de brassage suivant séquence de toutes les trois heures.

On constate que si le pourcentage d'oxygène résiduel a tendance à croître au fur et à mesure du développement du processus, chacune des séquences de brassage représentée par une flèche a pour effet de réduire cette proportion ou de la stabiliser.

En fait, suivant le graphique tel qu'énoncé, il peut être organisé une auto-régulation de l'activité biologique par un déclenchement automatique du malaxeur par tous moyens connus dès que le niveau résiduel s'élève.

Sur la même figure est représentée en traits courts l'évolution du pourcentage d'oxygène résiduel dans le cas d'un préréglage de la fréquence de brassage à une séquence de toutes les heures, durée au delà de laquelle la consommation de $O_2$ se stabilise et tend à diminuer.

On constate qui grâce au brassage ainsi régulé auquel s'ajoute l'apport régulier d'air, la consommation de $O_2$ est régulière et sans évolution brutale à la hausse ou à la baisse.

De ce fait, on obtient une optimisation du processus de fermentation qui peut s'effectuer dans de bonnes conditions et dans un délai relativement bref, par exemple de l'ordre de deux à trois jours.

Le brassage discontinu conjointement avec l'apport permanent et régulé d'air présente en outre l'avantage de n'utiliser que l'énergie nécéssaire.

Il va de soi que l'invention peut recevoir des aménagements et des variantes et que notamment les durées et quantités données sont variables en fonction de la nature et structure des matériaux à composter.

Le produit est parfaitement stable et peut, aprés la phase de maturation sur l'aire de stockage 8 ou en tout autre lieu, être utilisé sans risque.

La présente invention peut recevoir des aménagements et des variantes sans pour autant sortir du cadre du présent brevet.

**Revendications**

1. Installation de compostage en vue de l'obtention d'un compost stabilisé par fermentation aérobie de composés animaux et/ou végétaux d'origines diverses dans une enceinte ou fermenteur (6) doté de moyens d'alimentation en air et de moyens internes de brassage (13) et (15) des composés soumis à la fermentation, les dits moyens pouvant être actionnés de manière intermittante caractérisé en ce que le fermenteur est constitué à partir d'éléments modulaires interchangeables et superposables; chaque module étant constitué d'une cuve cylindrique horizontale dotée de moyens de brassage (13) et (15) de moyens d'introduction d'air, d'une ouverture supérieure de chargement (11) et d'une ouverture inférieure (12) de vidange en relation avec l'ouverture de chargement (11) du module inférieur, les ouvertures d'alimentation (11) et de vidange (12) étant respectivement disposées à chaque extrémité de la cuve suivant son axe longitudinal.

2. Installation de compostage selon la revendication 1 caractérisée en ce que chacun des éléments modulaires (10) ou cuve horizontale est doté sur un axe transversal horizontal (13) de pales (15) disposées suivant une configuration hélicoïdale en sorte qu'elles constituent des moyens de brassage et d'évacuation du produit.

3. Installation du compostage selon la revendication 1 caractérisé en ce que les cuves (10) sont disposées à l'intérieur d'un bâti permettant leur gerbage.

4. Installation de compostage selon la revendication 1 caractérisée en ce que entre les ouvertures (12) de vidange et (11) d'alimentation de l'un quelconque des éléments modulaires est intercalé un dispositif broyeur et ou déchiqueteur.

**Patenansprüche**

1. Kompostierungsanlage zur Herstellung eines durch Aerobgärung von Tier bzw Pflanzen, verbindungen verschiedener Arten stabilisierten Komposts in einen Schrank oder einem Gärungsraum (6), der mit Luftversorgungsvorrichtungen und mit internen Umrührenvorrichtungen für die der Gärung unterzoginen Verbindungen versehen ist, da die vergenannten Vorrichtungen zeitweiling in Betrieb gesetzt werden hönnen, dadurch gekennzeichnet, dass der Gärungsraum aus austauschbaren und stapelbaren Modulelementen besteht, meder modul besteht aus einen waagerechten zylindrischen mit Umrührenvorrichtung (13) und (15), luftversorgungsvorrichtungen, einer oberen Einfüllöffnung (11) und einer unteren Ablassöffnung (12) in Verbindung mit der Einfüllöffnung (11) des unteren moduls versehenen Gärbottich mit den am feden Bottichende nach der längsachse angeordneten Einfüll (11) und Ablass (12) Offnungen.

2. Kompostierungsanlage nach Anspruch 1, dadurch gekennzeichnet, dass jedes Modulelement (10) oder waagerechte Gärbottich auf einer Längsachse (13) mit nach einer spiralförmigen Konfiguration angeorduchen Schanfeln (15) versehen ist, so dass die Schanfeln Umrühren und Ablasselemente des produktes dasstellen.

3. Kompostierungsanlage nach Anspruch 1, dadurch gekennzeichnet, dass die Bottiche (10) in einem Rahmen angeordnet sind, der das Stapeln ermöglicht.

4. Kompositerungsanlage nach Anspruch 1, dadurch gekennzeichnet, dass zwischen den Einfüll (11) und Ablass (12) Offnungen eines urgendwelchen Modulelements eine Mühle bzw ein Stoffauflöser angeordnet ist.

**Claims**

1. Composting installation for obtaining stabilized compost by aerobic fermentation of animal and/or vegetable compounds from various origins in a chamber or fermenter (6) equipped with air supply means and internal mixing means (13) and (15) for compounds subjected to fermentation, the said means may be activated intermittently characterized in that the fermenter is comprised of interchangeable modular elements that can be superimposed; each module being comprised of a horizontal cylindrical drum equipped with mixing means and air introduction means (13) and (15), an upper loading aperture (11) and a lower emptying aperture (12) in relation to lower module loading aperture (11), the supply and emptying aperture (11) and (12) being respectively located at each end of the drum on its longitudinal axis.

2. Compositing installation according to claim 1 characterized in that each of the modular elements (10) or horizontal drum is equipped with a horizontal transversal shaft (13) with blades (15) arranged in a spiral configuration so that they constitute mixing and product evacuation means.

3. Composting installation according to claim 1 characterized in that the drums (10) are arranged within a frame enabling them to be stacked.

4. Composting installation according to claim 1 characterized in that a crushing or shreading device is installed between the supply and emptying apertures (12) and (11).

fig.1

fig.2

fig.3

**0 085 000**

Consommation d'O2

CO 2

O 2

T(°C)

Température

Fig 1 Evolution des paramètres observés au cours d'un cycle de compostage accéléré

fig. 4 — Durée du compostage (Heures)

**0 085 000**

Consom. d'O2
Produc. de CO2
( g/h)

A

Fig 3 Effets d un arrêt temporaire du brassage sur l'évolution des principaux paramètres du compostage

B

CO 2

O2

150

100

50

24    48    72    96    120

Durée du compostage (Heures)

Température
(°C)

Arrêts de brassage

A'

B'

Reprise de brassage

70
60
50
40
30
20

24    48    72    96    120

fig.5    Durée de compostage (Heures)

5

Détermination de la fréquence optimale de brassage

fig. 6

0 085 000